# EUROPEAN PATENT SPECIFICATION

(11) **EP 3 494 016 B1**
(45) Date of publication and mention of the grant of the patent: **08.07.2020**
(21) Application number: 17754541.5
(22) Date of filing: 04.08.2017
(51) Int. Cl.: B60S 1/38

(54) **WINDSCREEN WIPER DEVICE**
WISCHERANLAGE FÜR WINDSCHÜTZSCHEIBEN
ESSUIE GLACE POUR PARE BRISES

(30) Priority: 04.08.2016 US 201662371074 P; 26.06.2017 US 201715632495
(43) Date of publication of application: 12.06.2019
(73) Proprietor: Federal-Mogul Motorparts LLC, Southfield, MI 48034 (US)
(72) Inventor: YEE, Jesus, El Paso, TX 79924 (US); COX, Dennis, E., Belleville, MI 48111 (US); GUTIERREZ, Miguel, 32300 Chihuahua-Ciudad Juarez (MX)
(74) Representative: Hooiveld, Arjen Jan Winfried
(86) International application number: PCT/US2017/045405
(87) International publication number: WO 2018/027087

(56) References cited:
- WO-A1-2012/139635
- DE-A1-102011 078 175
- FR-A1- 2 911 834

## Description

### BACKGROUND OF THE INVENTION

### 1. Field of the Invention

The present invention is related, generally, to windscreen wiper devices and port particularly to the connecting devices of windscreen wiper devices.

### 2. Related Art

Wiper devices typically fall into one of three basic categories: conventional, beam and hybrid. Conventional blades utilize a frame structure which consists of a system of yokes arranged in a tournament-style construction to distribute a biasing force from an oscillating wiper arm across a length of an elastomeric wiper blade. Beam blades utilize a carrier element, which typically includes one or more longitudinal strips of spring steel, to distribute the biasing force along the length of the wiper strip. Hybrid blades typically include both a frame structure and a carrier element to distribute the biasing force from the wiper arm.

In beam blades, a connecting device is attached directly to the carrier element. In some cases, the connecting device is glued/bonded with the carrier element, and in others, the connecting device is ultrasonically welded with the carrier element.

Document WO 2012/139635 A1 discloses a windscreen wiper device according to the preamble of claim 1 and a method of making a windscreen wiper device according to the preamble of claim 9.

### SUMMARY OF THE INVENTION AND ADVANTAGES

One aspect of the present invention is related to a windscreen wiper device which includes a wiper blade that is made of an elastomeric material and that extends lengthwise in a longitudinal direction. The wiper device also includes a carrier element which is pre-curved to have a curved shape when in a relaxed condition. The carrier element operatively supports the wiper blade and biases the wiper blade into a curved shape. The carrier element has a pair of opposing lateral edges, and at least one of the lateral edges has a notched formed into it. A connector base is operably connected with the carrier element. The base includes at least one projection which is received in the at least one notch of the carrier element for restricting relative movement between the connector base and the carrier element in the longitudinal direction. The connector base also includes a plurality of locking arms which engage around the lateral edges of the carrier element to lockingly connect the connector base with the carrier element. The plurality of locking arms includes at least one long locking arm on one lateral side of the connector base and includes at least one short locking arm on an opposite lateral side of the connector base form the at least one long locking arm. The at least one short locking arm has a lateral width which is less than the at least one long locking arm. The at least one short locking arm has a ramped lower surface for allowing the at least one short locking arm to snappingly engage the carrier element.

The wiper device according to this embodiment advantageously allows the connector base to be more quickly, simply and firmly secured with the carrier element in a cost effective manner.

According to another aspect of the present invention, the connector base includes at least two short locking arms and at least two long locking arms.

According to yet another aspect of the present invention, the carrier element includes at least one notched formed into each of the lateral edges, and the connector base includes a pair of projections which are received into the notches.

According to still another aspect of the present invention, the at least two locking arms are located on opposite longitudinal sides of one of the projections, and the at least two short locking arms are located on opposite longitudinal sides of another of the projections.

According to a further aspect of the present invention, each of the long legs has an upper surface with a curved end for allowing the base to be rotated relative to the carrier element during installation of the base onto the carrier element to snappingly engage the short locking arms with the carrier element.

According to yet a further aspect of the present invention, the connector base is made of a single piece of injection molded plastic.

According to still a further aspect of the present invention, a joint part is pivotably connected with the connector base.

Another aspect of the present invention is related to a method of making a windscreen wiper device. The method includes the step of operably connecting a pre-curved carrier element that has opposing lateral edges with notches formed therein with an elastomeric wiper blade to bias the wiper blade into a curved shape. The method continues with the step of preparing a connector which includes a base that has a bottom wall with at least one projection formed therein and also has at least one short locking arm that extends from one lateral side of the bottom wall and at least one long locking arm that extends from an opposite lateral side of the bottom wall. The at least one short locking arm has a ramped lower surface. The method proceeds with the step of inserting one lateral edge of the carrier element into a gap between the at least one long locking arm and the bottom wall of the base. rotating the base relative to the carrier element until the ramped surface of the at least one short locking arm contacts an opposite lateral edge of the carrier element. The method continues with the step of flexing the base by continued rotation of the base relative to the carrier element. The method proceeds with the step of snappingly engaging the at least one short locking arm of the base around an opposite lateral edge of the carrier element from the at least one long locking arm. The method continues with the step of receiving the at least one projection in the at least one notch of the carrier element.

According to another aspect of the present invention, the base of the connector is made as a single piece of injection molded plastic.

According to yet another aspect of the present invention, the at least one long locking arm includes a chamfered distal end for facilitating the rotation of the base relative to the carrier element.

According to still another aspect of the present invention, the carrier element includes a pair of longitudinal strips.

According to a further aspect of the present invention, the carrier element includes a pair of notches, and the base includes a pair of projections.

According to yet a further aspect of the present invention, the base includes a pair of short locking arms and a pair of long locking arms.

According to still a further aspect of the present invention, the short locking arms are located on opposite longitudinal sides of one of the projections and the long locking arms are located on opposite longitudinal sides of the other of the projections.

### BRIEF DESCRIPTION OF THE DRAWINGS

These and other aspect, features and advantages of the invention will become more readily appreciated when considered in connection with the following detailed description of the presently preferred embodiment and best mode, appended claims and accompanying drawings, in which:
Figure 1 is a perspective elevation view of an exemplary embodiment of a windscreen wiper device constructed in accordance with one aspect of the present invention;
Figure 2 is a fragmentary and enlarged view of a portion of the wiper device of Figure 1;
Figure 3 is a fragmentary and perspective elevation view of an underside of a portion of the wiper device of Figure 1;
Figure 4 is a fragmentary and perspective elevation view of a carrier element and a wiper blade of the wiper device of Figure 1;
Figure 5 is a perspective and elevation view of a base of a connector of the wiper device of Figure 1;
Figure 6 is a fragmentary and bottom elevation view of the wiper device of Figure 1;
Figure 7 is a cross-sectional view of the wiper device taken through Line 7-7 of Figure 6;
Figure 8 is a cross-sectional view of the wiper device taken through Line 8-8 of Figure 6; and
Figure 9 is a cross-sectional view of the wiper device of Figure 1 showing the connector base being attached with the longitudinal strips.

### DETAILED DESCRIPTION OF THE ENABLING EMBODIMENT

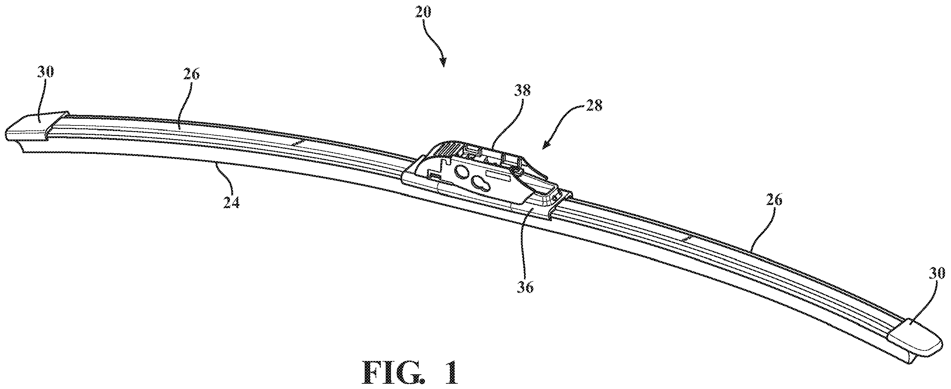

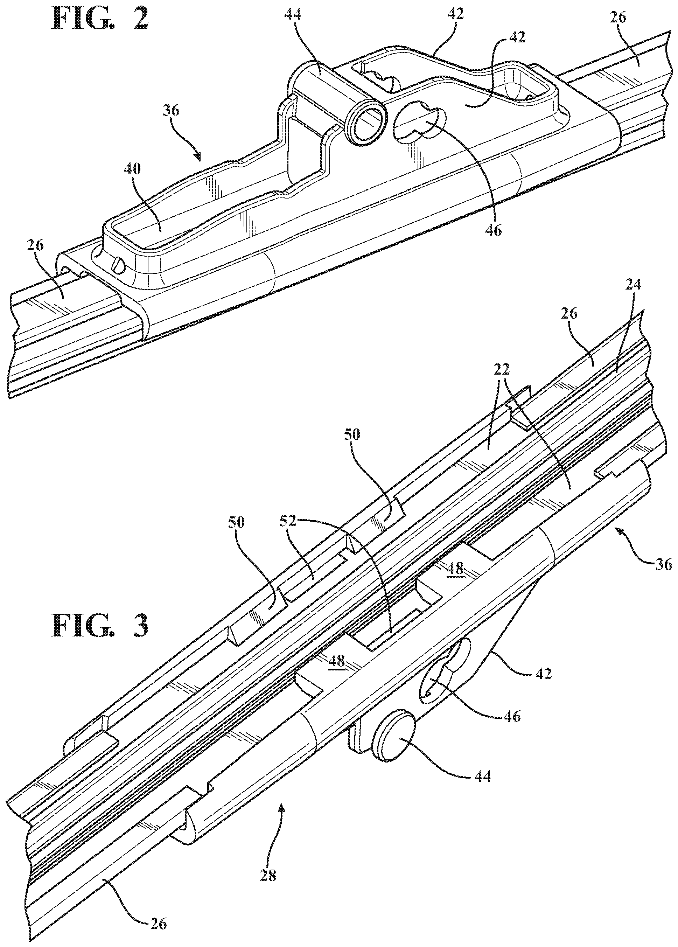

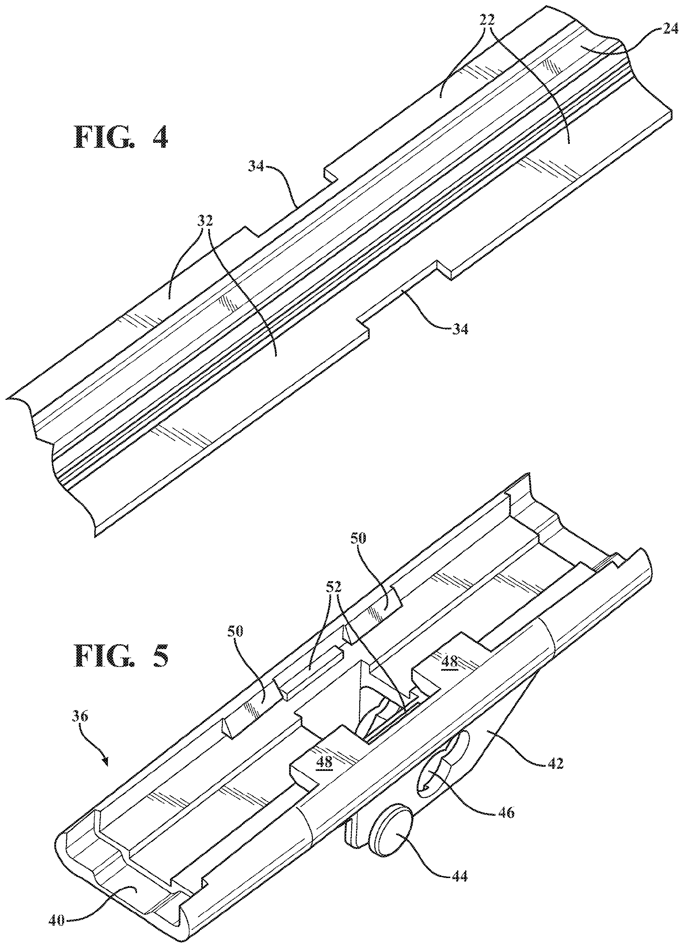

Referring to the Figures, wherein like numerals indicate corresponding parts throughout the several views, an exemplary embodiment of a windscreen wiper device **20** is generally shown in Figure 1. The windscreen wiper device **20** has a beam-style construction in that it includes a carrier element **22** (shown in Figures 3 and 4) which extends lengthwise in a longitudinal direction and is pre-shaped to bias a wiper blade **24** that is made of an elastomeric material, such as rubber, into a curved shape. The curved shape of the wiper blade **24** allows its entire length to be sealed and remain sealed against a curved windshield (not shown) of a vehicle as the windscreen wiper device **20** oscillates back and forth across the windshield. That is, in the exemplary windscreen wiper device **20,** the pre-curved carrier element **22,** rather than a series of yokes, distributes a force from an oscillating wiper arm (not shown) across the length of the wiper blade **24.**

The exemplary windscreen wiper device **20** also includes a pair of covers **26,** which are made as separate pieces from one another and are attached with the carrier element **22.** Although they are not in the exemplary embodiment, the covers **26** may be shaped to impart a downforce on the wiper blade **24** when the vehicle is travelling at speed to improve the fluid-tight seal between the wiper blade **24** and the windshield. A connector **28** is engaged with the carrier element **22** at approximately a longitudinal midpoint of the carrier element **22** and between the covers **26** for lockingly connecting the windscreen wiper device **20** with an oscillating wiper arm (not shown). A pair of end caps **30** are engaged with opposite ends of the carrier element **22** for retaining the covers **26** on the carrier element **22** between the connector **28** and the end caps **30.** As shown in Figures 3 and 4, in the exemplary embodiment, the carrier element **22** includes a pair of longitudinal strips **22** (also known as flexors) that are made of spring steel and that are received in longitudinally extending grooves of the wiper blade **24.** However, it should be appreciated that the carrier element could take other forms, e.g., the carrier element could be a single longitudinal strip that is glued to the wiper strip or it could be a single longitudinal strip that is received within a single longitudinal groove of a one-piece wiper strip and spoiler.

Referring now to Figure 4, each of the longitudinal strips **22** has an outwardly facing lateral edge **32** which extends in the longitudinal direction along the length of the respective longitudinal strip **22.** The laterally outwardly facing edges **32** are provided with notches **34,** or recesses, formed therein at approximately their respective longitudinal midpoints such that the notches **34** are longitudinally aligned with one another.

Referring now to Figures 1-3, the connector **28** of the exemplary windscreen wiper device **20** includes a base **36** which is fixed with the longitudinal strips **22** and a joint part **38** which is pivotably connected with the base **36.** The exemplary joint part **38** is configured for attachment with bayonet-style and top lock-style oscillating wiper arms (not show) but may take any suitable shape for attachment with any suitable type of oscillating wiper arm. The pivoting connection between the base **36** and the joint part **38** allows the joint part **38** to be pivoted about a pivot axis relative to the base **36** when attaching the windscreen wiper device **20** with or detaching the windscreen wiper device **20** from an oscillating wiper arm.

The base **36** is made as a single piece of injection molded plastic and has a bottom wall **40** and a pair of side walls **42** that extend vertically upwardly from the bottom wall **40.** The side walls **42** are spaced from one another in a lateral direction and extend parallel to one another. A cylindrically shaped pin **44** is supported by the side walls **42** and extends in a lateral direction past each of the side walls **42.** The joint part **38** includes a pair of co-axial and circular-shaped openings which receive the pin **44** to establish the pivoting connection between the joint part **38** and the base **36.** The side walls **42** also present a pair of co-axially aligned windows **46** for receiving a side pin (not shown) to allow the connector to be attached with a side pin-style oscillating wiper arm (not shown).

As shown in Figure 3, the underside of the base **36** includes a plurality of locking arms **48, 50** and a pair of projections **52** which cooperate with the longitudinal strips **22** to operably secure the connector **28** with the longitudinal strips **22.** The projections **52** are generally shelf-like in shape and are shaped similarly to the notches **34** in the longitudinal strips **22.** The projections **52** extend vertically downwardly from a lower surface of the bottom wall **40.** As shown, when the base **36** is connected with the longitudinal strips **22,** longitudinal end surfaces on the projections **52** abut corresponding edges of the longitudinal strips **22** to restrict relative movement between the base **36** and the longitudinal strips **22.** The locking arms **48, 50** wrap around the opposite lateral edges **32** of the longitudinal strips **22** to hold the base **36** with the longitudinal strips **22** and to hold the projections **52** in the notches **34.** Accordingly, the locking arms **48, 50** hold the base **36** on the longitudinal strips **22,** and the projections **52** restrict relative movement between the base **36** and the longitudinal strips **22.**

In the exemplary embodiment, the base **36** has two projections **52** which are positioned on opposite lateral sides of the underside of the bottom wall **40** and are generally aligned with one another in the longitudinal direction at approximately a longitudinal midpoint of the base **36.** The exemplary embodiment of the base **36** also includes a total of four locking arms **48, 50,** which includes a pair of long locking arms **48** on one lateral side of the base **36** for engaging one of the longitudinal strips **22** and a pair of short locking arms **50** on an opposite lateral side of the base **36** for engaging the other of the longitudinal strips **22.** In the longitudinal direction, the two long locking arms **48** are located on opposite sides of one of the projections **52** and the two short locking arms **50** are located on opposite sides of the other projection. In the exemplary embodiment, the long and short locking arms **48, 50** are spaced from opposite longitudinal ends of the base **36.**

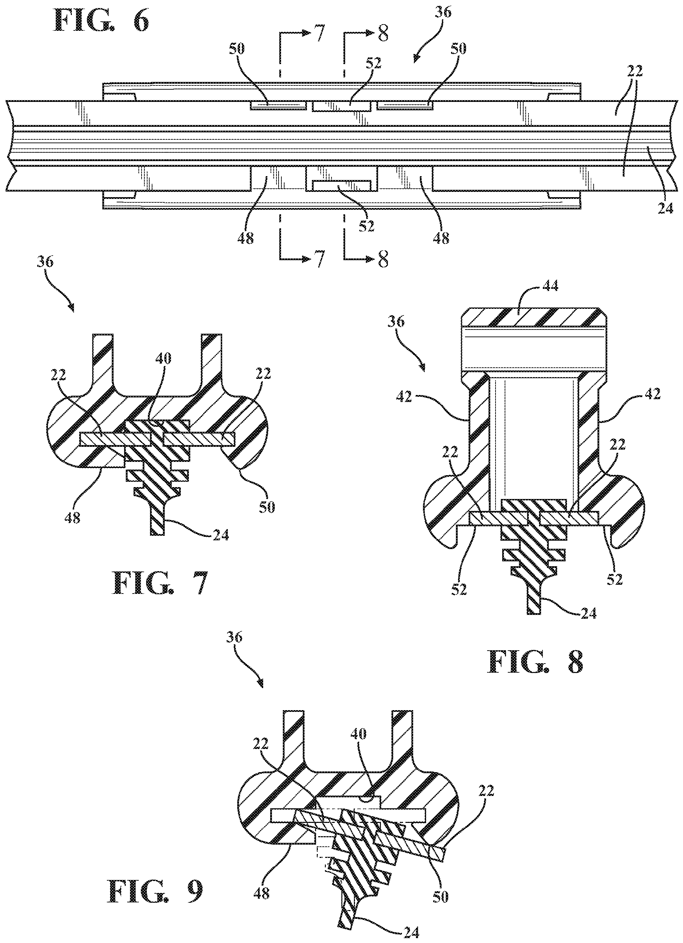

As shown in Figure 7, the long locking arms **48** have a greater width in the lateral direction than the short locking arms **50.** The distal ends of the long locking arms **48** are curved or chamfered downwardly (away from the longitudinal strips), and the short locking arms **50** have ramped lower surfaces.

Another aspect of the present invention is related to a method of making a windscreen wiper device **20,** such as the windscreen wiper device shown in Figure 1. The method includes the step of inserting the longitudinal strips **22** of the carrier element **22** into opposing longitudinal grooves of the elastomeric wiper blade **24** to bias the wiper blade **24** into a curved shape. The method continues with the steps of preparing the connector **28** and inserting one lateral edge **32** of one of the longitudinal strips **22** into the gaps between the long locking arms **48** and the bottom wall **40** of the base **36** such that the projection **52** between the long locking arms **48** is received into the notch **34** of the longitudinal strip **22.** As shown in Figure 9, the method proceeds with the step of rotating the base **36** relative to the longitudinal strips **22** until the ramped surfaces of the short locking arms **50** contact the lateral edge **32** of the other longitudinal strip **22.** The method continues with the step of elastically flexing the base **36** by continued rotation of the base **36** relative to the longitudinal strips **22.** This flexing automatically occurs due to the ramped surfaces of the short locking arms **50.** The method proceeds with the steps of snappingly engaging the short locking arms **50** of the base **36** around the opposite longitudinal strip **22** and receiving the projection **52** between the short locking arms **50** into the notch **34** of the longitudinal strip **22** connected therewith. The joint part **38** can be connected with the base **36** either before or after the base **36** is attached with the longitudinal strips **22.**

The resulting engagement between the base **36** and the longitudinal strips **22** does not involve the use of any of the adhesives, welding, fasteners or separate locking means that are commonly employed to attach a connector base with a longitudinal strip in a beam style wiper blade. Additionally, unlike other known wiper devices, the base does not have to be slid longitudinally from one end of the carrier element into its location. The joint part **38** may be coupled with the base **36** either before or after attaching the base **36** with the longitudinal strips **22.**

Obviously, many modifications and variations of the present invention are possible in light of the above teachings. It is, therefore, to be understood that within the scope of the appended claims, the invention may be practiced otherwise than specifically described. It should also be appreciated that the directional terms such as "upper", "lower", "top" and "bottom" are in reference to the orientations of the enabling embodiment of the invention shown in the Figures and are not meant to require any certain orientation.

## Claims

1. A windscreen wiper device (20), comprising:
a wiper blade (24) made of an elastomeric material and extending in a longitudinal direction;
a carrier element (22) that is pre-curved to have a curved shape when in a relaxed condition and operatively supporting said wiper blade (24) and biasing said wiper blade into a curved shape;
said carrier element having opposing lateral edges (32), at least one of said lateral edges having a notch (34) formed therein;
a connector base (36) operably connected with said carrier element (22) and including at least one projection (52) received in said at least one notch (34) of said carrier element for restricting relative movement between said connector base and said carrier element in said longitudinal direction;
said connector base further including a plurality of locking arms (48, 50) which engage around said lateral edges of said carrier element to lockingly connect said connector base with said carrier element;
the wiper device being **characterised in that** said plurality of locking arms include at least one long locking arm (48) on one lateral side of said connector base and at least one short locking arm (50) on an opposite lateral side of said connector base from said at least one long locking arm, said at least one short locking arm having a lateral width that is less than said at least one long locking arm; and
said at least one short locking arm having ramped lower surfaces for allowing said at least one short locking arm to snappingly engage said carrier element.

2. The windscreen wiper device as set forth in claim 1 wherein said connector base includes at least two short locking arms (50) and at least two long locking arms (48).

3. The windscreen wiper device as set forth in claim 2 wherein said carrier element includes at least one notched (34) formed into each of said lateral edges and wherein said connector base includes a pair of projections which are received in said notches.

4. The windscreen wiper device as set forth in claim 3 wherein said at least two long locking arms are located on opposite longitudinal sides of one of said projections and wherein said at least two short locking arms are located on opposite longitudinal sides of another of said projections.

5. The windscreen wiper device as set forth in claim 2 wherein each of said long legs has an upper surface with a curved end for allowing said base to be rotated relative to said carrier element during installation of said base onto said carrier element to snappingly engage said short locking arms with said carrier element.

6. The windscreen wiper device as set forth in claim 1 wherein said connector base is made of a single piece of injection molded plastic.

7. The windscreen wiper device as set forth in claim 1 wherein said carrier element includes a pair of longitudinal strips (22) which are received in opposing longitudinal grooves in said wiper blade.

8. The windscreen wiper device as set forth in claim 1 further including a joint part (38) which is pivotably connected with said connector base.

9. A method of making a windscreen wiper device (20), comprising the steps of:
operably connecting a pre-curved carrier element (22) that has opposing lateral edges with notches (34) formed therein with an elastomeric wiper blade (24) to bias the wiper blade into a curved shape;
the method of making a windscreen wiper device being **characterised in that** it further comprises the steps of:
preparing a connector (36) which includes a base that has a bottom wall (40) with at least one projection (52) formed therein and that has at least one short locking arm (50) extending from one lateral side of the bottom wall and at least one long locking arm (48) extending from an opposite lateral side of the bottom wall and wherein the at least one short locking arm has a ramped lower surface;
inserting one lateral edge of the carrier element into a gap between the at least one long locking arm and the bottom wall of the base;
rotating the base relative to the carrier element until the ramped surface of the at least one short locking arm contacts an opposite lateral edge of the carrier element;
flexing the base by continued rotation of the base relative to the carrier element;
snappingly engaging the at least one short locking arm of the base around an opposite lateral edge of the carrier element from the at least one long locking arm; and
receiving the at least one projection in the at least one notch of the carrier element.

10. The method as set forth in claim 9 wherein the base of the connector is made as a single piece of injection molded plastic.

11. The method as set forth in claim 10 wherein an upper surface of the at least one long locking arm includes a chamfered or curved distal end for facilitating the rotation of the base relative to the carrier element.

12. The method as set forth in claim 9 wherein the carrier element includes a pair of longitudinal strips.

13. The method as set forth in claim 9 wherein the carrier element includes a pair of notches and the base includes a pair of projections.

14. The method as set forth in claim 13 wherein the base includes a pair of short locking arms and a pair of long locking arms.

15. The method as set forth in claim 14 wherein the short locking arms are located on opposite longitudinal sides of one of the projections and the long locking arms are located on opposite longitudinal sides of the other of the projections.

## Patentansprüche

1. Scheibenwischervorrichtung (20), umfassend:
ein Wischerblatt (24), das hergestellt ist aus einem elastomeren Material und sich in einer Längsrichtung erstreckt;
ein Trägerelement (22), das vorgekrümmt ist, um eine gekrümmte Form aufzuweisen, wenn in einem entspannten Zustand, und das Wischerblatt (24) betriebsbereit stützt, und das Wischerblatt in eine gekrümmte Form vorspannt;
wobei das Trägerelement gegenüberliegende Seitenkanten (32) aufweist, wobei wenigstens eine der Seitenkanten eine darin gebildete Kerbe (34) aufweist;
einen Anschlusssockel (36), der im Betrieb mit dem Trägerelement (22) verbunden ist und wenigstens einen Vorsprung (52) einschließt, der in der wenigstens einen Kerbe (34) des Trägerelements aufgenommen ist, um Relativbewegung zwischen dem Anschlusssockel und dem Trägerelement in der Längsrichtung zu begrenzen;
wobei der Anschlusssockel ferner eine Vielzahl Verriegelungsarme (48, 50) einschließt, die um die Seitenkanten des Trägerelements eingreifen, um verriegelnd den Anschlusssockel mit dem Trägerelement zu verbinden;
wobei die Wischervorrichtung **dadurch gekennzeichnet ist, dass** die Vielzahl Verriegelungsarme wenigstens einen langen Verriegelungsarm (48) einschließt auf einer lateralen Seite des Anschlusssockels und wenigstens einen kurzen Verriegelungsarm (50) auf einer gegenüberliegenden lateralen Seite des Anschlusssockels von dem wenigstens einen langen Verriegelungsarm, wobei der wenigstens eine kurze Verriegelungsarm eine laterale Breite aufweist, die kleiner ist als der wenigstens eine lange Verriegelungsarm; und
wobei wenigstens ein kurzer Verriegelungsarm rampenförmige untere Flächen aufweist, um dem wenigstens einen kurzen Verriegelungsarm zu ermöglichen, schnappend in das Trägerelement einzugreifen.

2. Scheibenwischervorrichtung nach Anspruch 1, wobei der Anschlusssockel wenigstens zwei kurze Verriegelungsarme (50) und wenigstens zwei lange Verriegelungsarme (48) einschließt.

3. Scheibenwischvorrichtung nach Anspruch 2, wobei das Trägerelement wenigstens eine Kerbe (34) einschließt, die in jeder der Seitenkanten ausgebildet ist, und wobei der Anschlusssockel ein Paar Vorsprünge einschließt, die in den Kerben aufgenommen sind.

4. Scheibenwischervorrichtung nach Anspruch 3, wobei die wenigstens zwei langen Verriegelungsarme an gegenüberliegenden Längsseiten eines der Vorsprünge angeordnet sind und wobei die wenigstens zwei kurzen Verriegelungsarme an gegenüberliegenden Längsseiten eines anderen der Vorsprünge angeordnet sind.

5. Scheibenwischervorrichtung nach Anspruch 2, wobei jeder der langen Schenkel eine obere Fläche mit einem gekrümmten Ende aufweist, um dem Sockel zu ermöglichen, relativ zu dem Trägerelement gedreht zu werden während Installation des Sockels auf dem Trägerelement, um schnappend einzugreifen die kurzen Verriegelungsarme in das Trägerelement.

6. Scheibenwischervorrichtung nach Anspruch 1, wobei der Anschlusssockel aus einem einzelnen Stück spritzgegossenem Kunststoff hergestellt ist.

7. Scheibenwischervorrichtung nach Anspruch 1, wobei das Trägerelement ein Paar Längsstreifen (22) einschließt, die in gegenüberliegenden Längsnuten in dem Wischerblatt aufgenommen sind.

8. Scheibenwischervorrichtung nach Anspruch 1, ferner einschließend ein Gelenkteil (38), das schwenkbar mit dem Anschlusssockel verbunden ist.

9. Verfahren zum Herstellen einer Scheibenwischervorrichtung (20), umfassend die Schritte von:
betriebsbereites Verbinden eines vorgekrümmten Trägerelements (22), das gegenüberliegende Seitenkanten aufweist mit darin gebildeten Kerben (34), mit einem elastomeren Wischerblatt (24), um das Wischerblatt in eine gekrümmte Form vorzuspannen;
wobei das Verfahren zum Herstellen einer Scheibenwischervorrichtung **dadurch gekennzeichnet ist, dass** es ferner umfasst die Schritte von:
Vorbereiten eines Anschlusses (36), der einen Sockel einschließt, der eine Bodenwand (40) aufweist mit wenigstens einem darin ausgebildeten Vorsprung, und der wenigstens einen kurzen Verriegelungsarm (50) aufweist, der sich von einer lateralen Seite der Bodenwand erstreckt, und wenigstens einen langen Verriegelungsarm (48), der sich von einer gegenüberliegenden lateralen Seite der Bodenwand erstreckt, und wobei der wenigstens eine kurze Verriegelungsarm eine rampenförmige untere Fläche aufweist;
Einbringen einer Seitenkante des Trägerelements in einen Spalt zwischen dem wenigstens einen langen Verriegelungsarm und der Bodenwand des Sockels;
Drehen des Sockels relativ zu dem Trägerelement, bis die rampenförmige Fläche des wenigstens einen kurzen Verriegelungsarms eine gegenüberliegende Seitenkante des Trägerelements berührt;
Biegen des Sockels durch fortgesetzte Drehung des Sockels relativ zu dem Trägerelement;
schnappendes Eingreifen des wenigstens einen kurzen Verriegelungsarms des Sockels um eine gegenüberliegende Seitenkante des Trägerelements von dem wenigstens einen langen Verriegelungsarm; und
Empfangen des wenigstens einen Vorsprungs in der wenigstens einen Kerbe des Trägerelements.

10. Verfahren nach Anspruch 9, wobei der Sockel des Anschlusses als ein einzelnes Stück spritzgegossener Kunststoff hergestellt ist.

11. Verfahren nach Anspruch 10, wobei eine obere Fläche des wenigstens einen langen Verriegelungsarms ein abgeschrägtes oder gekrümmtes distales Ende einschließt, um die Drehung des Sockels relativ zu dem Trägerelement zu erleichtern.

12. Verfahren nach Anspruch 9, wobei das Trägerelement ein Paar Längsstreifen einschließt.

13. Verfahren nach Anspruch 9, wobei das Trägerelement ein Paar Kerben einschließt und der Sockel ein Paar Vorsprünge einschließt.

14. Verfahren nach Anspruch 13, wobei der Sockel ein Paar kurze Verriegelungsarme und ein Paar lange Verriegelungsarme einschließt.

15. Verfahren nach Anspruch 14, wobei die kurzen Verriegelungsarme auf gegenüberliegenden Längsseiten eines der Vorsprünge angeordnet sind und die langen Verriegelungsarme auf gegenüberliegenden Längsseiten des anderen der Vorsprünge angeordnet sind.

## Revendications

1. Dispositif de balai d'essuie-glace (20), comprenant :
une lame de balai (24) réalisée dans un matériau élastomère et s'étendant dans une direction longitudinale ;
un élément porteur (22) qui est pré-incurvé afin de présenter une forme incurvée dans un état détendu et supportant en fonctionnement ladite lame de balai (24) et sollicitant ladite lame de balai en une forme incurvée ;
ledit élément porteur présentant des bords latéraux opposés (32), l'un au moins desdits bords latéraux présentant une encoche (34) formée à l'intérieur ;
une base de raccord (36) reliée de manière opérationnelle audit élément porteur (22), et comprenant au moins une saillie (52) reçue dans ladite au moins une encoche (34) dudit élément porteur afin de limiter un déplacement relatif entre ladite base de raccord et ledit élément porteur dans ladite direction longitudinale ;
ladite base de raccord comprenant en outre une pluralité de bras de verrouillage (48, 50) qui viennent en prise autour desdits bords latéraux dudit élément porteur afin de connecter de manière verrouillé ladite base de raccord et ledit élément porteur ;
le dispositif de balai étant **caractérisé en ce que** ladite pluralité de bras de verrouillage comprennent au moins un bras de verrouillage long (48) sur un côté latéral de ladite base de raccord, et au moins un bras de verrouillage court (50) sur un côté latéral de ladite base de raccord opposé audit au moins un bras de verrouillage long, ledit au moins un bras de verrouillage court présentant une largeur latérale qui est inférieure à celle dudit au moins un bras de verrouillage long ; et
ledit au moins un bras de verrouillage court présentant des surfaces inférieures en rampe afin de permettre audit au moins un bras de verrouillage court de venir en prise par encliquetage avec ledit élément porteur.

2. Dispositif de balai d'essuie-glace selon la revendication 1, où ladite base de raccord comprend au moins deux bras de verrouillage courts (50) et au moins deux bras de verrouillage longs (48).

3. Dispositif de balai d'essuie-glace selon la revendication 2, où ledit élément porteur comprend au moins une encoche (34) formée dans chacun desdits bords latéraux, et où ladite base de raccord comprend une paire de saillies qui sont reçues dans lesdites encoches.

4. Dispositif de balai d'essuie-glace selon la revendication 3, où lesdits au moins deux bras de verrouillage longs se situent sur les côtés longitudinaux opposés de l'une desdites saillies, et où lesdits au moins deux bras de verrouillage courts se situent sur les côtés longitudinaux opposés d'une autre desdites saillies.

5. Dispositif de balai d'essuie-glace selon la revendication 2, où chacune desdites branches longues présente une surface supérieure avec une extrémité incurvée afin de permettre à ladite base de tourner par rapport audit élément porteur au cours de l'installation de ladite base sur ledit élément porteur afin de mettre en prise par encliquetage lesdits bras de verrouillage courts avec ledit élément porteur.

6. Dispositif de balai d'essuie-glace selon la revendication 1, où ladite base de raccord est réalisée d'une seule pièce de matière plastique moulée par injection.

7. Dispositif de balai d'essuie-glace selon la revendication 1, où ledit élément porteur comprend une paire de bandes longitudinales (22) qui sont reçues dans des rainures longitudinales opposées dans ladite lame de balai.

8. Dispositif de balai d'essuie-glace selon la revendication 1, comprenant en outre une partie articulation (38) qui est connectée de manière pivotante à ladite base de raccord.

9. Procédé de fabrication d'un dispositif de balai d'essuie-glace (20), comprenant les étapes suivantes :
relier de manière opérationnelle un élément porteur pré-incurvé (22) qui présente des bords latéraux opposés à l'intérieur desquels des encoches (34) sont formées, avec une lame de balai élastomère (24) afin de solliciter la lame de balai en une forme incurvée ;
le procédé de fabrication d'un dispositif de balai d'essuie-glace étant **caractérisé en ce qu'**il comprend en outre les étapes suivantes :
préparer un raccord (36) qui comprend une base qui présente une paroi inférieure (40) où est formée au moins une saillie (52), et qui présente au moins un bras de verrouillage court (50) qui s'étend à partir d'un côté latéral de la paroi inférieure, et au moins un bras de verrouillage long (48) qui s'étend à partir d'un côté latéral opposé de la paroi inférieure, et où l'au moins un bras de verrouillage court présente une surface inférieure en rampe ;
insérer un bord latéral de l'élément porteur dans un espace entre l'au moins un bras de verrouillage long et la paroi inférieure de la base ;
faire tourner la base par rapport à l'élément porteur jusqu'à ce que la surface en rampe de l'au moins un bras de verrouillage court, entre en contact avec un bord latéral opposé de l'élément porteur ;
fléchir la base par une rotation continue de la base par rapport à l'élément porteur ;
mettre en prise par encliquetage l'au moins un bras de verrouillage court de la base autour d'un bord latéral de l'élément porteur opposé à l'au moins un bras de verrouillage long ; et
recevoir l'au moins une saillie dans l'au moins une encoche de l'élément porteur.

10. Procédé selon la revendication 9, où la base du raccord est réalisée d'une seule pièce de matière plastique moulée par injection.

11. Procédé selon la revendication 10, où une surface supérieure du au moins un bras de verrouillage long comprend une extrémité distale chanfreinée ou incurvée destinée à faciliter la rotation de la base par rapport à l'élément porteur.

12. Procédé selon la revendication 9, où l'élément porteur comprend une paire de bandes longitudinales.

13. Procédé selon la revendication 9, où l'élément porteur comprend une paire d'encoches, et la base comprend une paire de saillies.

14. Procédé selon la revendication 13, où la base comprend une paire de bras de verrouillage courts et une paire de bras de verrouillage longs.

15. Procédé selon la revendication 14, où les bras de verrouillage courts se situent sur les côtés longitudinaux opposés de l'une des saillies, et les bras de verrouillage longs se situent sur les côtés longitudinaux opposés de l'autre des saillies.
